(19) **Europäisches Patentamt / European Patent Office / Office européen des brevets**

(11) **EP 4 488 435 A1**

(12) **EUROPEAN PATENT APPLICATION**
published in accordance with Art. 153(4) EPC

(43) Date of publication:
08.01.2025 Bulletin 2025/02

(21) Application number: 23760009.3

(22) Date of filing: 22.02.2023

(51) International Patent Classification (IPC):
*D04H 1/488* (2012.01)     *B01D 46/00* (2022.01)
*B01D 53/94* (2006.01)     *D04H 1/4209* (2012.01)
*D06M 11/45* (2006.01)     *D06M 11/79* (2006.01)
*D06M 15/263* (2006.01)     *F01N 3/28* (2006.01)

(52) Cooperative Patent Classification (CPC):
B01D 46/00; B01D 53/94; D04H 1/4209;
D04H 1/488; D06M 11/45; D06M 11/79;
D06M 15/263; F01N 3/28

(86) International application number:
PCT/JP2023/006349

(87) International publication number:
WO 2023/163009 (31.08.2023 Gazette 2023/35)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 28.02.2022 JP 2022029961

(71) Applicant: **IBIDEN CO., LTD.**
**Ogaki-shi, Gifu 503-8604 (JP)**

(72) Inventors:
• **KAWABE, Takayuki**
**Takahama-shi, Aichi 444-1301 (JP)**
• **KOGO, Yuta**
**Takahama-shi, Aichi 444-1301 (JP)**
• **YAMAZAKI, Tomohisa**
**Takahama-shi, Aichi 444-1301 (JP)**

(74) Representative: **Winter, Brandl - Partnerschaft mbB**
**Alois-Steinecker-Straße 22**
**85354 Freising (DE)**

(54) **MAT MATERIAL, EXHAUST GAS PURIFICATION DEVICE, AND METHOD FOR PRODUCING MAT MATERIAL**

(57) A mat material including inorganic fibers, with an inorganic binder and an organic binder attached to the mat material, wherein a ratio $[w_{1B}/w_{1A}]$ of a weight percentage $w_{1B}$ of the organic binder to a weight percentage $w_{1A}$ of the inorganic binder satisfies the following condition (1) or (2), where $w_{1A}$ is the weight percentage of the inorganic binder relative to a weight of the mat material as a whole, and $w_{1B}$ is the weight percentage of the organic binder relative to the weight of the mat material as a whole:

$$(1) \quad 0 < w_{1B}/w_{1A} \leq 0.8;$$

or

$$(2) \quad 9 \leq w_{1B}/w_{1A}.$$

FIG.1

EP 4 488 435 A1

**Description**

TECHNICAL FIELD

The present invention relates to a mat material, an exhaust gas conversion apparatus, and a method for producing a mat material.

BACKGROUND ART

Exhaust gas discharged from an internal combustion engine such as a diesel engine contains a particulate matter (hereinafter, also referred to as "PM"). Adverse effects of PM on the environment and human bodies have been problems. The exhaust gas also contains harmful gas components such as CO, HC, and NOx. This causes concerns about the effects of such harmful gas components on the environment and human bodies.

In view of the above, various exhaust gas conversion apparatuses that collect PM in exhaust gas and convert harmful gas components have been proposed. Such an exhaust gas conversion apparatus includes an exhaust gas treatment unit including porous ceramic such as silicon carbide or cordierite, a casing for housing the exhaust gas treatment unit, and a holding sealing material (mat material) between the exhaust gas treatment unit and the casing. The holding sealing material (mat material) is disposed mainly, for example, for preventing the exhaust gas treatment unit from being damaged by contact with the casing that covers the periphery of the exhaust gas treatment unit due to vibrations and impacts caused by operation of automobiles or the like, and for preventing exhaust gas leakage from a space between the exhaust gas treatment unit and the casing.

Patent Literature 1 discloses attaching of an organic binder and an inorganic binder to a mat material including inorganic fibers and use of the organic binder and the inorganic binder at a weight ratio of 1:1. Since the inorganic fibers are coated with a binder layer made of the organic binder and the inorganic binder, inorganic fiber scattering can be prevented or reduced.

CITATION LIST

- Patent Literature

Patent Literature 1: WO 2015/45636

SUMMARY OF INVENTION

- Technical Problem

When the inorganic binder and the organic binder are used at a weight ratio of 1:1, the friction between the inorganic fibers cannot be sufficiently increased, and the shear modulus is low. A mat material having a higher friction value and a higher shear modulus can more stably hold an exhaust gas treatment unit.

- Solution to Problem

The present invention was made in view of the above problems and aims to provide a mat material having a high shear modulus, with inorganic fiber scattering being prevented or reduced.

Specifically, the mat material of the present invention is a mat material including inorganic fibers, with an inorganic binder and an organic binder attached to the mat material, wherein a ratio $[w_{1B}/w_{1A}]$ of a weight percentage $w_{1B}$ of the organic binder to a weight percentage $w_{1A}$ of the inorganic binder satisfies the following condition (1) or (2), where $w_{1A}$ is the weight percentage of the inorganic binder relative to a weight of the mat material as a whole, and $w_{1B}$ is the weight percentage of the organic binder relative to the weight of the mat material as a whole:

$$(1)\ \ 0 < w_{1B}/w_{1A} \le 0.8;$$

or

$$(2)\ \ 9 \le w_{1B}/w_{1A}.$$

In the mat material of the present invention, the ratio $[w_{1B}/w_{1A}]$ of the weight percentage $w_{1B}$ of the organic binder to the weight percentage $w_{1A}$ of the inorganic binder satisfies (1) $0 < w_{1B}/w_{1A} \leq 0.8$ or (2) $9 \leq w_{1B}/w_{1A}$.

When the condition (1) is satisfied, the weight ratio of the inorganic binder is relatively high. Thus, slipping of the inorganic fibers on each other can be prevented or reduced by forming irregularities derived from the inorganic binder on a surface of each inorganic fiber.

When the condition (2) is satisfied, the weight ratio of the organic binder is relatively high, which increases the strength of a coating formed from the organic binder and the inorganic binder, so that slipping of the inorganic fibers on each other can be prevented or reduced.

When the ratio $[w_{1B}/w_{1A}]$ of the weight percentage $w_{1B}$ of the organic binder to the weight percentage $w_{1A}$ of the inorganic binder is more than 0.8 and less than 9, the effect of the formation of irregularities derived from the inorganic binder on the surface of each inorganic fiber is not sufficiently exhibited, and the effect of an increased strength of the coating due to the organic binder is also not sufficiently exhibited.

Preferably, in the mat material of the present invention, the inorganic binder and the organic binder are attached in an individually dispersed state to the surface of each inorganic fiber.

When the inorganic binder and the organic binder are attached in an individually dispersed state to the surface of each inorganic fiber, the inorganic binder is in a dispersed state in the coating formed from the organic binder. The coating in such a state has excellent mechanical strength and thus can prevent the inorganic fibers from slipping on each other and increase the shear modulus of the mat material.

Preferably, the mat material of the present invention further contains a polymeric dispersant.

When the mat material further contains a polymeric dispersant, the organic binder and the inorganic binder can be easily attached in a dispersed state to the surface of each inorganic fiber.

In the mat material of the present invention, preferably, aggregates of the inorganic binder and the organic binder are attached to the surface of each inorganic fiber.

The aggregates of the inorganic binder and the organic binder can form irregularities on the surface of each inorganic fiber, which can increase the friction between the inorganic fibers and improve the holding power.

In the mat material of the present invention, preferably, the surface of each inorganic fiber is at least partially covered with a coating layer containing a mixture of the inorganic binder and the organic binder.

The coating layer containing a mixture of the inorganic binder and the organic binder has a higher mechanical strength than a coating layer containing only the organic binder. Thus, the coating layer is less likely to peel off, making it possible to increase the frictional resistance between the inorganic fibers.

In the mat material of the present invention, preferably, the coating layer is formed from a continuous flaky mixture of the inorganic binder and the organic binder.

When the coating layer is formed from the flaky mixture, many irregularities derived from the flaky mixture are formed on a surface of the coating layer, which can further increase the frictional resistance between the inorganic fibers.

In the mat material of the present invention, preferably, the coating layer has a stepped shape.

When the coating layer has a stepped shape, the frictional resistance between the inorganic fibers can be further increased.

In the mat material of the present invention, preferably, a particulate mixture of the inorganic binder and the organic binder is attached to the surface of the coating layer.

When the particulate mixture of the inorganic binder and the organic binder is attached to the surface of the coating layer, the frictional resistance between the inorganic fibers can be further increased than when no such particulate mixture is attached to the coating layer.

Preferably, the mat material of the present invention is a needle-punched mat in which at least one of a front surface or a back surface thereof is needled.

Preferably, the mat material of the present invention includes multiple entanglement points formed by needling at least one of the front surface or the back surface thereof, and a density $\rho$ of the entanglement points is in a range of 0.5 pcs/cm$^2 \leq \rho < 18$ pcs/cm$^2$.

When the density $\rho$ of the entanglement points is in the above range, the shear modulus can be improved.

Preferably, the mat material of the present invention includes multiple entanglement points formed by needling at least one of the front surface or the back surface thereof, and at least one of a 4 mm $\times$ 4 mm first region without the entanglement points or a 3 mm $\times$ 8 mm second region without the entanglement points is arranged in a 25 mm $\times$ 25 mm region.

In the mat material of the present invention, preferably, at least one of the first region or the second region is arranged in a plural number in the 25 mm $\times$ 25 mm region.

When at least one of the first region or the second region is arranged in a plural number in the 25 mm $\times$ 25 mm region, the surface pressure of the mat material can be increased.

Preferably, the mat material of the present invention is used in an exhaust gas conversion apparatus.

The mat material of the present invention has a high shear modulus, and thus can be suitably used in an exhaust gas conversion apparatus.

Preferably, the mat material of the present invention has a shear modulus of 0.26 or more.

At a shear modulus of 0.26 or more, the mat material is less likely to shear when an exhaust gas treatment unit is pressed into a metal casing using the mat material of the present invention.

The shear modulus is determined by dividing the shear failure load by the reduced surface pressure.

Methods for measuring the shear failure load and the reduced surface pressure are described later.

Preferably, the mat material of the present invention further includes a protective sheet on at least one surface thereof.

The protective sheet, when further placed on the surface of the mat material, prevents or reduces displacement and/or dense wrinkles of the mat material and generation of a gap in a fitting portion when the mat material is wound around an exhaust gas treatment unit.

An exhaust gas conversion apparatus of the present invention includes an exhaust gas treatment unit, a metal casing for housing the exhaust gas treatment unit, and a mat material arranged between the exhaust gas treatment unit and the metal casing for holding the exhaust gas treatment unit, wherein the mat material is the mat material of the present invention.

The exhaust gas conversion apparatus of the present invention can stably hold the exhaust gas treatment unit owing to the arrangement of the mat material of the present invention between the exhaust gas treatment unit and the metal casing.

A method for producing a mat material according to a first embodiment of the present invention includes a needle-punched mat preparing step of preparing an inorganic fiber mass including inorganic fibers by needling; and an attaching step of attaching an inorganic binder and an organic binder to the inorganic fiber mass, wherein a ratio $[w_{2B}/w_{2A}]$ of a weight percentage $w_{2B}$ of the organic binder to a weight percentage $w_{2A}$ of the inorganic binder satisfies the following condition (3) or (4), where $w_{2A}$ is the weight percentage of the inorganic binder for use in the attaching step, and $w_{2B}$ is the weight percentage of the organic binder for use in the attaching step:

$$(3) \quad 0 < w_{2B}/w_{2A} \leq 0.8;$$

or

$$(4) \quad 9 \leq w_{2B}/w_{2A}.$$

In the method for producing a mat material according to the first embodiment of the present invention, preferably, in the attaching step, a dispersion in which the inorganic binder and the organic binder are dispersed in a dispersion medium is attached to the inorganic fiber mass.

In the method for producing a mat material according to the first embodiment of the present invention, preferably, in the attaching step, an aggregated dispersion in which the inorganic binder and the organic binder are aggregated is attached to the inorganic fiber mass.

A method for producing a mat material according to a second embodiment of the present invention includes: a defibrating step of defibrating inorganic fibers; a slurry preparing step of mixing the opened inorganic fibers with a solvent, an inorganic binder, and an organic binder to prepare a slurry; and a papermaking step of subjecting the slurry to papermaking to obtain an inorganic fiber papermaking sheet; and a drying step of drying the inorganic fiber papermaking sheet, wherein a ratio $[w_{3B}/w_{3A}]$ of a weight percentage $w_{3B}$ of the organic binder to a weight percentage $w_{3A}$ of the inorganic binder satisfies the following condition (5) or (6), where $w_{3A}$ is the weight percentage of the inorganic binder contained in the slurry to be prepared in the slurry preparing step, and $w_{3B}$ is the weight percentage of the organic binder contained in the slurry to be prepared in the slurry preparing step:

$$(5) \quad 0 < w_{3B}/w_{3A} \leq 0.8;$$

or

$$(6) \quad 9 \leq w_{3B}/w_{3A}.$$

The method for producing a mat material of the present invention can easily produce the mat material of the present invention.

BRIEF DESCRIPTION OF DRAWINGS

FIG. 1 is a schematic perspective view of an example of a mat material of the present invention.

FIG. 2 is a schematic view of an example of arrangement of entanglement points in the mat material of the present invention.

FIG. 3 is a schematic view of an example of the mat material in which the entanglement points are evenly arranged.

FIG. 4 is an example of an enlarged electron microscope image of the mat material of the present invention.

FIG. 5 is another example of an enlarged electron microscope image of the mat material of the present invention.

FIG. 6 is still another example of an enlarged electron microscope image of the mat material of the present invention.

FIG. 7 is still another example of an enlarged electron microscope image of the mat material of the present invention.

FIG. 8 is a conceptual schematic view of a shear failure load test device.

FIG. 9 is a schematic side view of an example of a measuring device for measuring inorganic fiber scattering properties.

FIG. 10 is a schematic plan view of a portion of a sample supporting arm constituting the measuring device for measuring inorganic fiber scattering properties.

FIG. 11 is a schematic view of an example of another example of the mat material of the present invention.

FIG. 12 is a schematic cross-sectional view of an example of the exhaust gas conversion apparatus of the present invention.

DESCRIPTION OF EMBODIMENTS

Hereinafter, embodiments of the present invention are specifically described. The present invention is not limited to the embodiments described below, and suitable modifications may be made without departing from the scope of the present invention.

[Mat Material]

The mat material of the present invention is a mat material including inorganic fibers, with an inorganic binder and an organic binder attached to the mat material, wherein a ratio $[w_{1B}/w_{1A}]$ of a weight percentage $w_{1B}$ of the organic binder to a weight percentage $w_{1A}$ of the inorganic binder satisfies the following condition (1) or (2), where $w_{1A}$ is the weight percentage of the inorganic binder relative to a weight of the mat material as a whole, and $w_{1B}$ is the weight percentage of the organic binder relative to the weight of the mat material as a whole:

$$(1) \quad 0 < w_{1B}/w_{1A} \leq 0.8;$$

or

$$(2) \quad 9 \leq w_{1B}/w_{1A}.$$

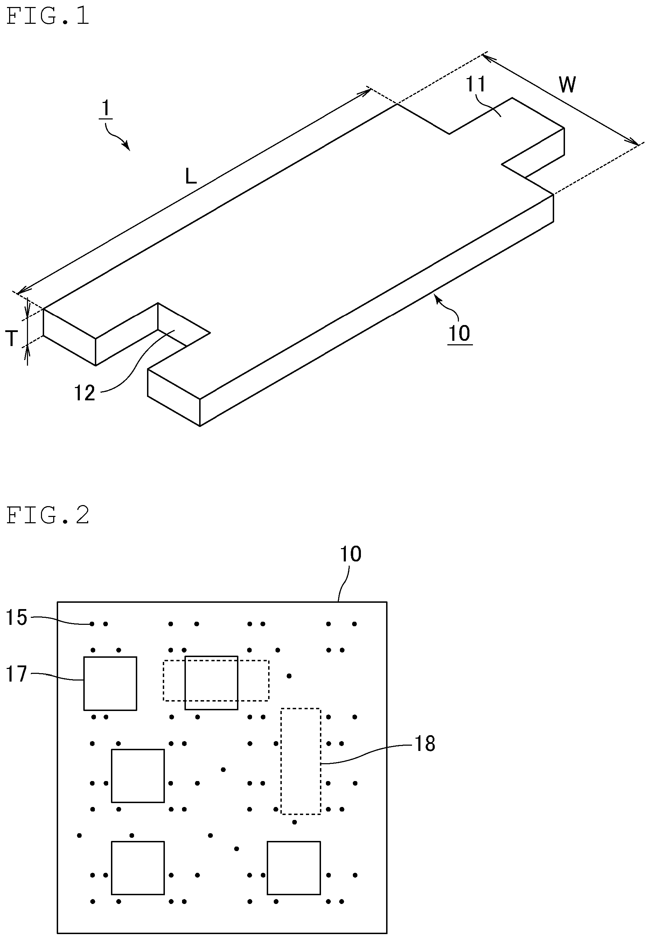

FIG. 1 is a schematic perspective view of an example of the mat material of the present invention.

As shown in FIG. 1, a mat material 1 of the present invention includes a flat plate-like mat 10 having a generally rectangular shape in a plan view, with a predetermined length (hereinafter indicated by an arrow L in FIG. 1), a predetermined width (indicated by an arrow W in FIG. 1), and a predetermined thickness (indicated by an arrow T in FIG. 1).

The mat 10 shown in FIG. 1 includes a protrusion 11 and a recess 12 respectively at one end and the other end in a longitudinal direction of the mat 10. The protrusion 11 and the recess 12 of the mat 10 have shapes that perfectly fit each other when the mat 10 is wound around an exhaust gas treatment unit to assemble an exhaust gas conversion apparatus (described later). The protrusion 11 and the recess 12 result in better sealing properties when the mat 10 is arranged in the exhaust gas conversion apparatus (described later).

Neither the protrusion nor the recess may be provided at the ends of the mat material of the present invention.

Each end of the mat may have an L-shape such that the ends fit each other when the mat material is wound around an object.

The mat thickness is not limited but is preferably 2 to 40 mm. At a mat thickness of more than 40 mm, the mat loses its flexibility, which makes handling difficult when the mat material is wound around an exhaust gas treatment unit, and which also makes the mat material prone to winding wrinkles and cracking.

At a mat thickness of less than 2 mm, the exhaust gas treatment unit easily falls out due to insufficient holding power of the mat material. In addition, when changes occur in the volume of the exhaust gas treatment unit, the mat material is less likely to absorb such changes in the volume of the exhaust gas treatment unit. Thus, the exhaust gas treatment unit becomes prone to cracking and the like.

The mat includes inorganic fibers.

Any inorganic fibers may be used, but the inorganic fibers preferably include at least one selected from the group consisting of alumina fibers, silica fibers, alumina silica fibers, mullite fibers, biosoluble fibers, and glass fibers.

The inorganic fibers including at least one selected from alumina fibers, silica fibers, alumina silica fibers, and mullite fibers have excellent heat resistance, so that the properties or the like will not change, even when the exhaust gas treatment unit is exposed to sufficiently high temperatures, and the mat material can sufficiently maintain its function. In the case where the inorganic fibers are biosoluble fibers, for example, even when a worker inhales the inorganic fibers that are scattered during production of the exhaust gas conversion apparatus using the mat material, the inorganic fibers will dissolve *in vivo* and thus cause no harm to the health of the worker.

The alumina fibers may contain, in addition to alumina, additives such as calcia, magnesia, and zirconia.

The compositional ratio of the alumina silica fibers by weight is preferably $Al_2O_3:SiO_2 = 60:40$ to 80:20, more preferably $Al_2O_3:SiO_2 = 70:30$ to 74:26.

The mat can be produced by needling or papermaking. The inorganic fiber mass produced by needling is also referred to as "needle-punched mat", and the mat produced by papermaking is also referred to as "papermaking mat".

In the case of needling, the average fiber length of the inorganic fibers is preferably 1 to 150 mm, more preferably 10 to 80 mm.

Inorganic fibers having an average fiber length of less than 1 mm are too short in length, so that such inorganic fibers are insufficiently entangled with each other and result in poor winding properties of the mat material when the mat material is wound around the exhaust gas treatment unit, making the mat material easily breakable. Inorganic fibers having an average fiber length of more than 150 mm are too long in length, so that there are fewer fibers constituting the mat material, reducing the denseness of the mat material. As a result, the mat material has a low shear strength.

In the case of papermaking, the average fiber length of the inorganic fibers is preferably 200 to 20000 $\mu$m, more preferably 300 to 10000 $\mu$m, still more preferably 500 to 1500 $\mu$m.

In the case of needling, entanglement points are formed on the front surface or back surface of the mat material.

Preferably, the density $\rho$ of the entanglement points is in the range of 0.5 pcs/cm$^2 \leq \rho <$ 18 pcs/cm$^2$.

When the entanglement points are formed on both the front surface and back surface of the mat material, the density $\rho$ of the entanglement points is the density of the entanglement points measured on a main surface, either the front surface or back surface, with a higher density of the entanglement points.

In the case of needling, preferably, at least one of a 4 mm $\times$ 4 mm first region without the entanglement points or a 3 mm $\times$ 8 mm second region without the entanglement points is arranged in a 25 mm $\times$ 25 mm region of the front surface or back surface of the mat material.

A high surface pressure is exhibited owing to the arrangement of at least one of the first region or the second region.

The main surface of the mat material to be checked to determine whether at least one of the first region or the second region is arranged thereon is the main surface on which the density of the entanglement points is measured.

FIG. 2 is a schematic view of an example of arrangement of the entanglement points in the mat material of the present invention.

In FIG. 2, multiple entanglement points 15 are unevenly arranged. This arrangement is considered as including first regions 17 that are 4 mm $\times$ 4 mm regions without the entanglement points 15 (regions indicated with squares in solid lines in FIG. 2) and second regions 18 that are 3 mm $\times$ 8 mm regions without the entanglement points 15 (regions indicated with rectangles in dashed lines in FIG. 2).

FIG. 2 does not show all the first regions 17 or all the second regions 18.

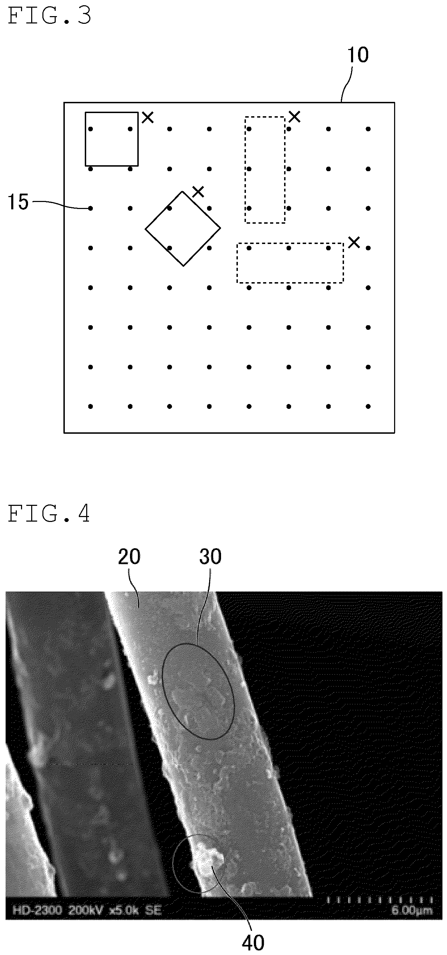

FIG. 3 is a schematic view of an example of the mat material in which the entanglement points are evenly arranged.

In FIG. 3, the entanglement points 15 are evenly arranged at intervals of 2.8 mm.

Each of the 4 mm $\times$ 4 mm squares and the 3 mm $\times$ 8 mm rectangles shown in FIG. 3 includes one or more entanglement points. A symbol "$\times$" is added to each of the 4 mm $\times$ 4 mm squares not corresponding to the first regions and the 3 mm $\times$ 8 mm rectangles not corresponding to the second regions.

Accordingly, neither the first regions nor the second regions can be arranged in the mat material shown in FIG. 3.

The number of the first regions and the second regions in the 25 mm $\times$ 25 mm region can be counted by the following method.

(1) A 4 mm $\times$ 4 mm region (first region) in which no entanglement points are formed is located. At this point, multiple first regions that do not overlap with each other are selected.

(2) A 3 mm $\times$ 8 mm region (second region) in which no entanglement points are formed is located. At this point, multiple second regions that do not overlap with each other are selected. The second region and the first region may overlap with each other. When the first region and the second region overlap with each other, the area without the entanglement points increases, which can increase the surface pressure of the mat material.

(3) A 25 mm × 25 mm region in which the total number of non-overlapping first regions and non-overlapping second regions is the maximum is selected.

The above operation is performed for ten samples, and the average is calculated.

The above operation may be performed using commercially available image processing software or the like.

Preferably, at least one of the first region or the second region is arranged in a plural number in the 25 mm × 25 mm region.

When at least one of the first region or the second region is arranged in a plural number in the 25 mm × 25 mm region, the surface pressure of the mat material can be increased.

That "at least one of the first region or the second region is arranged in a plural number" refers to a case where the total number of the first regions and the second regions is two or more, which includes, for example, a case where multiple first regions are arranged, a case where multiple second regions are arranged, and a case where multiple first regions and multiple second regions are arranged.

Preferably, a third region, which is a 4 mm × 4 mm region including four or more entanglement points, is arranged in the 25 mm × 25 mm region on the front surface or back surface of the mat material.

The arrangement of the third region can increase the shear strength of the mat material because the inorganic fibers in the third region are strongly entangled with each other.

The method for counting the number of the third regions in the 25 mm × 25 mm region is the same as the method for counting the number of the first regions described above.

The mat material contains an inorganic binder (also referred to as "inorganic binding material") and an organic binder (also referred to as "organic binding material").

The ratio [$w_{1B}/w_{1A}$] of the weight percentage $w_{1B}$ of the organic binder to the weight percentage $w_{1A}$ of the inorganic binder satisfies the following condition (1) or (2), where $w_{1A}$ is the weight percentage of the inorganic binder relative to the weight of the mat material as a whole, and $w_{1B}$ is the weight percentage of the organic binder relative to the weight of the mat material as a whole:

$$(1) \quad 0 < w_{1B}/w_{1A} \leq 0.8;$$

or

$$(2) \quad 9 \leq w_{1B}/w_{1A}.$$

When the condition (1) is satisfied, the weight ratio of the inorganic binder is relatively high. Thus, slipping of the inorganic fibers on each other can be prevented or reduced by forming irregularities derived from the inorganic binder on the surface of each inorganic fiber.

When the condition (1) is satisfied, the ratio [$w_{1B}/w_{1A}$] of the weight percentage $w_{1B}$ of the organic binder to the weight percentage $w_{1A}$ of the inorganic binder is preferably $0 < w_{1B}/w_{1A} \leq 0.5$, more preferably $0 < w_{1B}/w_{1A} \leq 0.3$, still more preferably $0 < w_{1B}/w_{1A} \leq 0.1$.

When the condition (2) is satisfied, the weight ratio of the organic binder is relatively high, which increases the strength of the coating formed from the organic binder and the inorganic binder, so that slipping of the inorganic fibers on each other can be prevented or reduced.

When the condition (2) is satisfied, the ratio [$w_{1B}/w_{1A}$] of the weight percentage $w_{1B}$ of the organic binder to the weight percentage $w_{1A}$ of the inorganic binder is preferably $10 \leq w_{1B}/w_{1A}$, more preferably $11 \leq w_{1B}/w_{1A}$, still more preferably $13 \leq w_{1B}/w_{1A}$.

When the ratio [$w_{1B}/w_{1A}$] of the weight percentage $w_{1B}$ of the organic binder to the weight percentage $w_{1A}$ of the inorganic binder is more than 0.8 and less than 9, the effect of the formation of irregularities derived from the inorganic binder on the surface of each inorganic fiber is not sufficiently exhibited, and the effect of an increased strength of the coating due to the organic binder is also not sufficiently exhibited.

The weight percentage $w_{1A}$ of the inorganic binder attached to the mat material and the weight percentage $w_{1B}$ of the organic binder attached to the mat material can be measured by the following method.

First, a certain weight of a sample is taken out from a mat material. An organic solvent (e.g., tetrahydrofuran) that dissolves the organic binder in the sample is selected, and the organic binder is dissolved in a Soxhlet extractor to separate the organic binder from the sample. At this point, the inorganic binder is also separated, together with the dissolved organic binder, from the sample, so that the organic binder and the inorganic binder are both extracted in the organic solvent. The organic solvent containing the organic binder and the inorganic binder is placed in a crucible, and the organic solvent is removed by evaporation with heat. The weight of the residue remaining in the crucible thereafter is regarded as the total weight of the organic binder and the inorganic binder attached to the mat material. Further, the crucible is heated at 600°C for one hour to burn out the organic binder. Since the inorganic binder remains in the crucible, the weight of the residue is regarded as the weight of the inorganic binder, and the difference in the weight of the residue before and after heating is regarded as the weight of the organic binder.

Examples of the inorganic binder include alumina sol and silica sol.

Preferably, the weight percentage $w_{1A}$ of the inorganic binder relative to the mat material (weight of inorganic binder/weight of mat material) is more than 0 wt% and 10 wt% or less.

When the weight percentage $w_{1A}$ of the inorganic binder relative to the mat material is in the above range, the holding power can be sufficiently increased.

Examples of the organic binder include water-soluble organic polymers such as acrylic resin, acrylate latex, rubber latex, carboxymethylcellulose, and polyvinyl alcohol; thermoplastic resins such as styrene resin; and thermosetting resins such as epoxy resin.

Preferably, the weight percentage $w_{1B}$ of the organic binder relative to the mat material (weight of organic binder/weight of mat material) is more than 0 wt% and 10 wt% or less.

When the weight percentage $w_{1B}$ of the organic binder relative to the mat material is in the above range, the holding power can be sufficiently increased.

The amounts of the organic binder and the inorganic binder in the mat material can be measured by the following method, for example.

First, a certain weight of a sample is taken out from a mat material in which the amounts of the organic binder and the inorganic binder therein are intended to be measured. Subsequently, an organic solvent (e.g., tetrahydrofuran) that dissolves the organic binder in the sample is selected, and the organic binder is dissolved in a Soxhlet extractor to separate the organic binder from the sample. At this point, the inorganic binder in the dissolved organic binder is also separated from the sample, so that the organic binder and the inorganic binder are both extracted in the organic solvent.

Next, the organic solvent containing the organic binder and the inorganic binder is placed in a crucible, and the organic solvent is removed by evaporation with heat. The amount (weight %) of the residue remaining in the crucible relative to the weight of the mat material is calculated, assuming that the weight of the residue is the total weight of the organic binder and the inorganic binder relative to the mat material.

Further, the crucible is heated at 600°C for one hour to burn out the organic binder. Since the inorganic binder remains in the crucible, the amount of the inorganic binder is calculated, assuming that the amount of the residue is the amount (weight %) of the inorganic binder relative to the total of the organic binder and the inorganic binder. The balance is the amount (weight %) of the organic binder.

The weight ratio of the total of the inorganic binder and the organic binder to the mat material (total weight of inorganic binder and organic binder/weight of mat material) is preferably 0.01 wt% or more and 25 wt% or less, more preferably 0.1 wt% or more and 15 wt% or less.

Preferably, the inorganic binder and the organic binder are attached in an individually dispersed state to the surface of each inorganic fiber.

When the inorganic binder and the organic binder are attached in an individually dispersed state to the surface of each inorganic fiber, the inorganic binder is in a dispersed state in a coating formed from the organic binder. The coating in such a state has excellent mechanical strength and thus can prevent the inorganic fibers from slipping on each other and increase the holding power.

In the mat material, preferably, the surface of each inorganic fiber is at least partially covered with a coating layer containing a mixture of the inorganic binder and the organic binder.

The coating layer containing a mixture of the inorganic binder and the organic binder has a higher mechanical strength than a coating layer containing only the organic binder. Thus, the coating layer is less likely to peel off, making it possible to increase the frictional resistance between the inorganic fibers.

Preferably, the coating layer is formed from a continuous flaky mixture (mixture of the inorganic binder and the organic binder).

When the coating layer is formed from the flaky mixture, many irregularities derived from the flaky mixture are formed on the surface of the coating layer, which can further increase the frictional resistance between the inorganic fibers.

FIG. 4 is an example of an enlarged electron microscope image of the mat material of the present invention.

As shown in FIG. 4, the surface of an inorganic fiber 20 is partially covered with a coating layer 30 containing a mixture of the inorganic binder and the organic binder. The coating layer 30 is formed from a continuous flaky mixture of the inorganic binder and the organic binder. A particulate mixture 40 of the inorganic binder and the organic binder is attached to the surface of the inorganic fiber 20.

Whether the coating layer and the particles contain a mixture of the inorganic binder and the organic binder can be confirmed by a combination of field observation under an electronic microscope and elemental analysis.

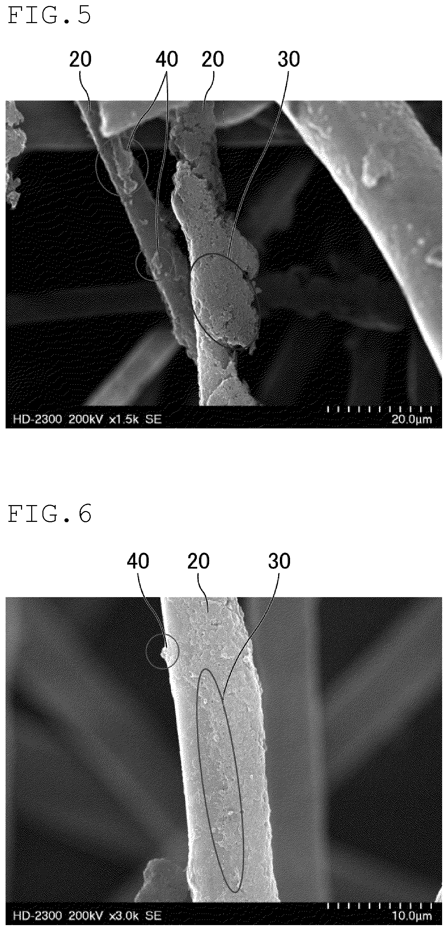

FIG. 5 is another example of an enlarged electron microscope image of the mat material of the present invention.

As shown in FIG. 5, the surface of the inorganic fiber 20 is partially covered with the coating layer 30 containing a mixture of the inorganic binder and the organic binder. The coating layer 30 is formed from a continuous flaky mixture of the inorganic binder and the organic binder. The particulate mixture 40 of the inorganic binder and the organic binder is attached to the surface of the inorganic fiber 20.

The coating layer may or may not have a uniform thickness.

The shape of the coating layer having a non-uniform thickness is also referred to as "stepped shape".

That the coating layer has a stepped shape means that there are irregularities on the surface of the coating layer, so that the frictional resistance between the inorganic fibers can be further increased.

Whether the coating layer has irregularities on the surface, i.e., whether the coating layer has a stepped shape, can be determined by enlarging the surface of each inorganic fiber to a magnification of 3000 times using a scanning electronic microscope and checking for the presence or absence of irregularities on the surface of the coating layer.

FIG. 6 is still another example of an enlarged electron microscope image of the mat material of the present invention.

As shown in FIG. 6, the surface of the inorganic fiber 20 is partially covered with the coating layer 30 containing a mixture of the inorganic binder and the organic binder. The coating layer 30 has a stepped shape with a non-uniform thickness.

The particulate mixture 40 of the inorganic binder and the organic binder is attached to the surface of the inorganic fiber 20.

Preferably, particles containing a mixture of the inorganic binder and the organic binder are attached to the surface of the coating layer.

When the particles containing a mixture of the inorganic binder and the organic binder are attached to the surface of the coating layer, the frictional resistance between the inorganic fibers can be further increased than when no such particles are attached to the coating layer.

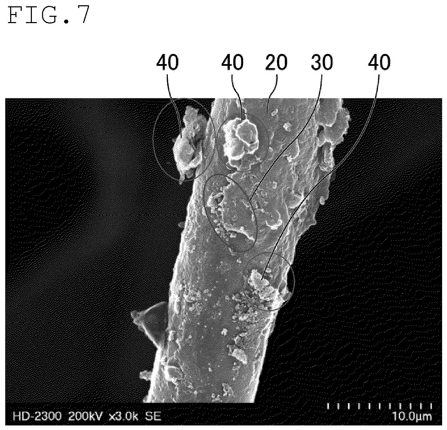

FIG. 7 is still another example of an enlarged electron microscope image of the mat material of the present invention.

As shown in FIG. 7, the surface of the inorganic fiber 20 is partially covered with the coating layer 30 containing a mixture of the inorganic binder and the organic binder. The coating layer 30 is formed from a continuous flaky mixture of the inorganic binder and the organic binder. The coating layer 30 has a stepped shape with a non-uniform thickness. The particulate mixture 40 of the inorganic binder and the organic binder is attached to the surface of the coating layer 30.

Preferably, the mat material further contains a polymeric dispersant.

When the mat material further contains a polymeric dispersant, the organic binder and the inorganic binder can be easily attached in a dispersed state to the surface of each inorganic fiber.

Examples of the polymeric dispersant include synthetic hydrophilic polymeric substances including anionic polymeric dispersants such as polycarboxylic acid and/or a salt thereof, a naphthalenesulfonate formalin condensate and/or a salt thereof, polyacrylic acid and/or a salt thereof, polymethacrylic acid and/or a salt thereof, and polyvinyl sulfonic acid and/or a salt thereof, and nonionic polymeric dispersants such as polyvinyl alcohol, polyvinylpyrrolidone, and polyethylene glycol; natural hydrophilic polymers such as gelatin, casein, and water-soluble starch; and semi-synthetic hydrophilic polymeric substances such as carboxymethylcellulose.

Of these, synthetic hydrophilic polymeric substances are preferred, and anionic polymeric dispersants are more preferred.

One of these polymeric dispersants may be used alone or two or more of these may be used in combination. A polymeric dispersant having both a structure that exhibits properties as an anionic polymeric dispersant and a structure that exhibits properties as a nonionic polymeric dispersant may also be used.

A particularly preferred polymeric dispersant is an anionic polymeric dispersant having a number average molecular weight of 500 to 100000.

Preferably, the amount of the polymeric dispersant is 50 to 1000 ppm relative to the weight of the inorganic fibers.

In the mat material, preferably, aggregates of the inorganic binder and the organic binder are attached to the surface of each inorganic fiber.

The aggregates of the inorganic binder and the organic binder can form irregularities on the surface of each inorganic fiber, which can increase the friction between the inorganic fibers and improve the holding power.

The mat material may further contain a flocculant.

When the mat material further contains a flocculant, the organic binder and the inorganic binder can be easily attached in an aggregated state to the surface of each inorganic fiber.

Whether the inorganic binder and the organic binder attached to the surface of each inorganic fiber are either dispersed or aggregated can be checked by observing the surface of each inorganic fiber by SEM-EDX or the like.

Preferably, the mat material of the present invention has a shear modulus of 0.26 or more as determined by dividing the shear failure load by the reduced surface pressure.

At a shear modulus of 0.26 or more, the mat material is less likely to shear when an exhaust gas treatment unit is pressed into a metal casing using the mat material of the present invention.

The shear modulus is determined by dividing the shear failure load by the reduced surface pressure.

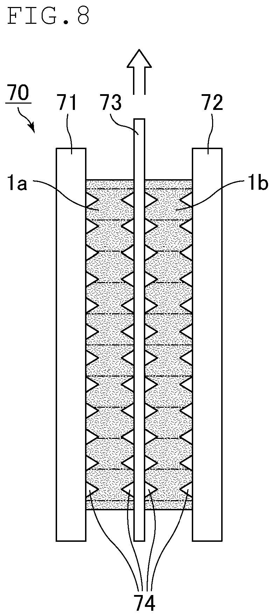

The shear failure load can be measured by a shear failure load test device shown in FIG. 8.

FIG. 8 is a conceptual schematic view of a shear failure load test device.

A shear failure load test device 70 shown in FIG. 8 includes specimens 1a and 1b, one on each side of a stainless-steel plate 73. The specimens 1a and 1b are sandwiched between a left jig 71 and a right jig 72. Many protruding members 74 are disposed on a specimen-contacting surface of each of the left jig 71 and the right jig 72 and specimen-contacting surfaces of the stainless-steel plate 73.

The specimens 1a and 1b are pierced by the protruding members 74 and are thereby fixed to the left jig 71, the right jig 72, and the stainless-steel plate 73.

In this state, the specimens are compressed to a bulk density (GBD) of 0.3 g/cm$^3$.

Next, the stainless-steel plate 73 is moved at a rate of 5 mm/min toward the direction (upward) indicated by an arrow in FIG. 8. Yet, the stainless-steel plate 73 cannot slip out of the specimens 1a and 1b because the stainless-steel plate 73 is fixed to the specimens 1a and 1b with the protruding members 74. Thus, a shear failure occurs in the specimens 1a and 1b when a shear force equal to or greater than the shear failure load of the specimen is applied to the specimens 1a and 1b.

The shear force applied to the stainless-steel plate when a shear failure occurred in the specimens is determined.

The resulting shear force is divided by the area of the specimens, whereby the shear failure load (kPa) can be determined. The shear failure load may be measured using specimens obtained by cutting out portions of the mat material.

The reduced surface pressure can be measured by the following procedure.

First, the mat material is compressed to a bulk density of 0.3 g/cm$^3$ at room temperature and kept in the state for 20 minutes. Then, the load is measured.

The resulting load is divided by the area of the specimen, whereby the reduced surface pressure (kPa) can be determined. The reduced surface pressure may be measured using specimen obtained by cutting out portions of the mat material.

The mat material of the present invention has a fiber scattering rate (wt%) of 0.35 wt% or less as measured by a scattering test.

The scattering test is performed by the following procedure.

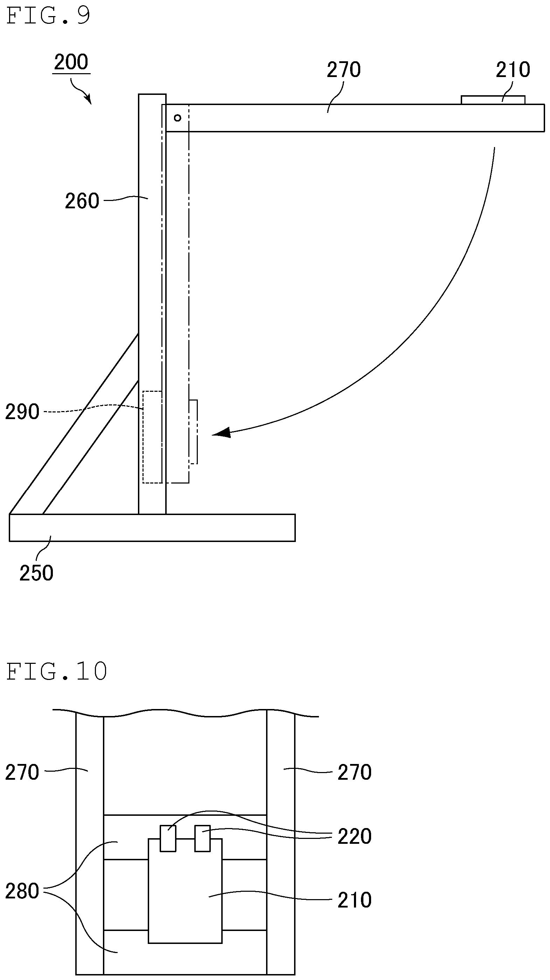

First, the mat material was cut out into a size of 100 mm × 100 mm to obtain a scattering test sample 210. The scattering rate of the inorganic fibers in the scattering test sample can be measured using a measuring device shown in FIG. 9 and FIG. 10.

FIG. 9 is a schematic side view of an example of a measuring device for measuring inorganic fiber scattering properties. FIG. 10 is a schematic plan view of a portion of a sample supporting arm constituting the measuring device for measuring inorganic fiber scattering properties. As shown in FIG. 9, a test device 200 includes a base 250, two supporting posts 260 vertically placed on the base 250, and two sample supporting arms 270 connected at their one ends to upper ends of the supporting posts 260 such that the sample supporting arms 270 are rotatable within a predetermined range. Further, a vertical wall member 290 is fixed at a position where the vertical wall member 290 can collide with the sample supporting arms between the two supporting posts.

FIG. 10 is a schematic plan view of a portion of a sample supporting arm constituting the measuring device for measuring inorganic fiber scattering properties. As shown in FIG. 10, the other end of each sample supporting arm 270 is fixed by a sample fixing member 280 that couples the ends of the sample supporting arms 270 with each other. Another sample fixing member 280 is present at a position away by a certain distance toward the supporting post 260 from the sample fixing member 280 connected to the ends of the sample supporting arms 270. The two sample supporting arms 270 are coupled with each other at at least two positions via the sample fixing members.

The sample supporting arms 270 are locked at a predetermined locking mechanism at a position where the sample supporting arms 270 form an angle of 90° with the supporting post 260, and the scattering test sample 210 is fixed to the sample fixing member 280 with clips 220. When the sample supporting arms 270 are unlocked, the sample supporting arms 270 and the scattering test sample 210 start falling toward the base 250 on which the supporting post 260 is fixed. Then, the falling direction changes such that the sample supporting arms 270 rotate about a junction between the sample supporting arms 270 and the supporting post 260. At the point where the sample supporting arms 270 become parallel to the supporting post 260, the sample supporting arms 270 collide with the vertical wall member 290. Due to the collision, a portion of the inorganic fibers constituting the scattering test sample 210 breaks and scatters. Thus, the fiber scattering rate can be determined by measuring the weight of the scattering test sample before and after the collision and using the following formula (1).

Fiber scattering rate (wt%) = (Weight of scattering test sample before test - Weight of scattering test sample after test)/(Weight of scattering test sample before test) × 100 (1)    (1)

The mat material may further include a protective sheet on at least one surface thereof.

The protective sheet is placed on at least one surface of the mat.

The protective sheet, when further placed on the surface of the mat, prevents or reduces displacement and/or dense wrinkles of the mat material and generation of a gap in a fitting portion when the mat material is wound around an exhaust gas treatment unit.

The protective sheet may be made of any material, but, for example, a flexible resin such as polypropylene is preferred.

The protective sheet may be a non-woven fabric made of flexible resin fibers, for example.

The protective sheet may be made of a combination of two or more different materials.

The two or more materials may make up the same non-woven fabric, or two or more different non-woven fabrics may be stacked together to form the protective sheet.

The protective sheet thickness is not limited but is preferably 1 $\mu$m to 1 mm.

At a protective sheet thickness of less than 1 $\mu$m, the effect of reducing deformation of the mat may not be sufficient.

At a protective sheet thickness of more than 1 mm, the ease of handling may be reduced.

The ratio of the protective sheet thickness to the mat thickness is not limited but is preferably in the range of about 1:10 to about 1:1000, more preferably in the range of about 1:50 to about 1:200.

The protective sheet may be adhered to the mat by any method, such as one in which hot melt powder is placed between the protective sheet and the mat and is melted by heat.

Preferably, the surface on which the protective sheet is disposed is the surface that faces the outside when the mat material is wound around an exhaust gas treatment unit.

The protective sheet may include a slit formed therein.

The slit may be oriented in any direction. It may be oriented in the longitudinal or width direction of the mat material.

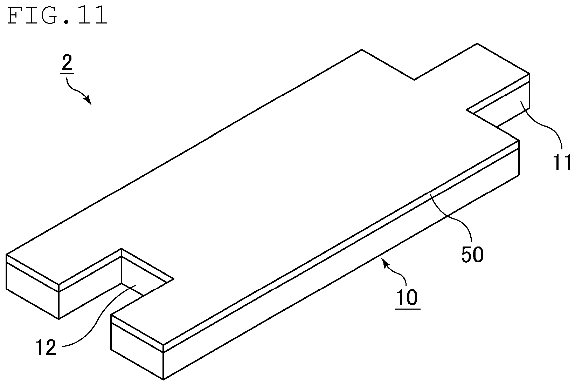

FIG. 11 is a schematic view of an example of another example of the mat material of the present invention.

A mat material 2 shown in FIG. 11 includes the mat 10 and a protective sheet 50 on one surface of the mat 10.

The protective sheet may be disposed only on one surface of the mat or on each surface of the mat.

[Exhaust Gas Conversion Apparatus]

An exhaust gas conversion apparatus of the present invention includes an exhaust gas treatment unit, a metal casing for housing the exhaust gas treatment unit, and a mat material arranged between the exhaust gas treatment unit and the metal casing for holding the exhaust gas treatment unit, wherein the mat material is the mat material of the present invention.

The exhaust gas conversion apparatus of the present invention can stably hold the exhaust gas treatment unit owing to the arrangement of the mat material of the present invention between the exhaust gas treatment unit and the metal casing.

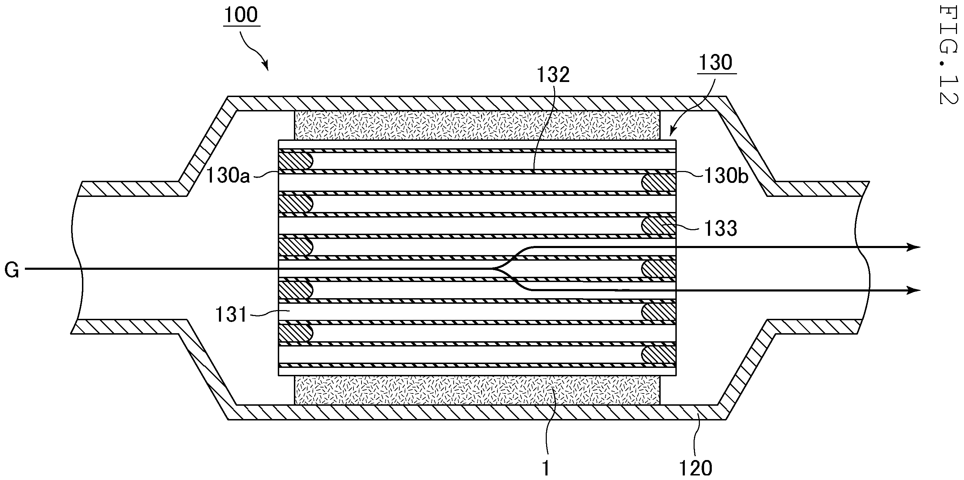

FIG. 12 is a schematic cross-sectional view of an example of the exhaust gas conversion apparatus of the present invention.

As shown in FIG. 12, an exhaust gas conversion apparatus 100 includes a metal casing 120, an exhaust gas treatment unit 130 housed in the metal casing 120, and the mat material 1 arranged between the exhaust gas treatment unit 130 and the metal casing 120. The mat material 1 is the mat material of the present invention.

The exhaust gas treatment unit 130 has a pillar shape in which many cells 131 are arranged in parallel in a longitudinal direction with cell walls 132 between the cells. If necessary, an inlet tube for introducing exhaust gas discharged from an internal combustion engine and an outlet tube for discharging the exhaust gas that has passed through the exhaust gas conversion apparatus are connected to ends of the casing 120.

In the exhaust gas conversion apparatus 100 shown in FIG. 12, although the exhaust gas treatment unit 130 is an exhaust gas filter (honeycomb filter) in which one of the ends of each cell is plugged with a plug 133, the exhaust gas treatment unit 130 may be a catalyst carrier not plugged with plugs at either end surface.

As shown in FIG. 12, the exhaust gas that was discharged from the internal combustion engine and that flowed into the exhaust gas conversion apparatus 100 (in FIG. 12, the exhaust gas is denoted by G, and the exhaust gas flow is indicated by arrows) flows into one of the cells 131 open at an exhaust gas inlet-side end 130a of the exhaust gas treatment unit (honeycomb filter) 130, and then passes through the cell wall 132 between the cells 131. At this point, PM in the exhaust gas is collected by the cell wall 132, and the exhaust gas is converted. The converted exhaust gas flows out from another cell 131 open at an exhaust gas discharge-side end 130b and is discharged to the outside.

[Method for Producing Mat Material (First Embodiment)]

A method for producing a mat material according to a first embodiment of the present invention includes a needle-punched mat preparing step of preparing an inorganic fiber mass including inorganic fibers by needling; and an attaching step of attaching an inorganic binder and an organic binder to the inorganic fiber mass, wherein a ratio [$w_{2B}/w_{2A}$] of a weight percentage $w_{2B}$ of the organic binder to a weight percentage $w_{2A}$ of the inorganic binder satisfies the following condition (3) or (4), where $w_{2A}$ is the weight percentage of the inorganic binder for use in the attaching step, and $w_{2B}$ is the weight percentage of the organic binder for use in the attaching step:

$$(3) \quad 0 < w_{2B}/w_{2A} \leq 0.8;$$

or

$$(4) \quad 9 \leq w_{2B}/w_{2A}.$$

[Needle-Punched Mat Preparing Step]

In the needle-punched mat preparing step, an inorganic fiber mass including inorganic fibers is prepared by needling. The inorganic fiber mass obtained by needling is also referred to as "needle-punched mat".

Examples of methods for preparing an inorganic fiber mass by needling include a method that includes a spinning step of spinning a spinning mixture containing at least an inorganic compound and an organic polymer to produce an inorganic fiber precursor; a compressing step of compressing the inorganic fiber precursor to produce a sheet; a needle-punching step of needle-punching at least one surface of the sheet to produce a needle-punched article; and a firing step of firing the needle-punched article.

[Spinning Step]

In the spinning step, the spinning mixture containing at least an inorganic compound and an organic polymer is spun to produce an inorganic fiber precursor.

In the spinning step, for example, a spinning mixture containing an aqueous solution of basic aluminum chloride, silica sol, and the like as raw materials is spun by blowing, whereby an inorganic fiber precursor having an average fiber diameter of 3 to 10 $\mu$m is produced.

[Compressing Step]

In the compressing step, the inorganic fiber precursor obtained in the spinning step is compressed to produce a continuous sheet having a predetermined size.

[Needle-Punching Step]

In the needle-punching step, at least one surface of the sheet obtained in the compressing step is needle-punched to produce a needle-punched article.

In the needle-punching step, preferably, the needle arrangement density is set to 0.5 needles/cm$^2$ or more and less than 18 needles/cm$^2$.

In the needle-punching step, the positions where the needles are arranged correspond to the entanglement points in the mat material. Thus, when the needle arrangement density is set to 0.5 needles/cm$^2$ or more and less than 18 needles/cm$^2$, a mat material in which the density $\rho$ of the entanglement points is in the range of 0.5 pcs/cm$^2$ $\leq \rho <$ 18 pcs/cm$^2$ can be obtained by single needle-punching.

The needle arrangement density is not limited to the above range when the same sheet is needle-punched several times.

By intentionally unevenly arranging the needles in the needle-punching step, the arrangement of the entanglement points to be formed on the needle-punched article can be varied in density so as to form a 4 mm × 4 mm region without the entanglement points (first region) and/or a 3 mm × 8 mm region without the entanglement points in a 25 mm × 25 mm (second region) in a 25 mm × 25 mm region, while the density $\rho$ of the entanglement points is in the range of 0.5 pcs/cm$^2$ $\leq \rho <$ 18 pcs/cm$^2$.

Examples of methods for intentionally unevenly arranging the entanglement points include a method that includes needle-punching such that the entanglement points are evenly arranged and then additionally needle-punching some portions. Other examples include a method that includes performing needle-punching several times while moving the inorganic fiber precursor, and a method that include performing needle-punching using a needle board on which needles are not arranged at equal intervals.

In the needle-punching step, the needles may or may not penetrate in the thickness direction of the sheet.

[Firing Step]

In the firing step, the needle-punched article is fired to obtain an inorganic fiber mass including inorganic fibers.
The firing temperature of the needle-punched article is not limited but is preferably 1000°C to 1600°C.
Neither an inorganic binder nor an organic binder is attached to the inorganic fiber mass (needle-punched mat) prepared by needling.

[Attaching Step]

Subsequently, the attaching step is performed in which an inorganic binder and/or an organic binder is attached to the inorganic fiber mass.
Examples of methods for attaching an inorganic binder and an organic binder to the inorganic fiber mass include a method that includes bringing a binder mixture of a solvent, an inorganic binder, and an organic binder into contact with the inorganic fiber mass and then drying the binder mixture.
Examples of methods for bringing a binder mixture into contact with the inorganic fiber mass include a method that includes immersing the inorganic fiber mass in a binder mixture and a method that includes dropping a binder mixture onto the inorganic fiber mass by curtain coating or the like.
A mat constituting the mat material can be obtained by attaching an inorganic binder and/or an organic binder to the inorganic fiber mass.
The weights of the inorganic binder and the organic binder for use in the attaching step are set such that the ratio $[w_{2B}/w_{2A}]$ of the weight percentage $w_{2B}$ of the organic binder to the weight percentage $w_{2A}$ of the inorganic binder satisfies the following condition (3) or (4), where $w_{2A}$ is the weight percentage of the inorganic binder relative to the binder mixture, and $w_{2B}$ is the weight percentage of the organic binder relative to the binder mixture:

$$(3) \quad 0 < w_{2B}/w_{2A} \leq 0.8;$$

or

$$(4) \quad 9 \leq w_{2B}/w_{2A}.$$

In the method for producing a mat material according to the first embodiment of the present invention, an inorganic binder and an organic binder are attached to the inorganic fiber mass to which neither an inorganic binder nor an organic binder is attached. Thus, the mat material of the present invention can be obtained by adjusting the ratio $[w_{2B}/w_{2A}]$ of the weight percentage $w_{2B}$ of the organic binder to the weight percentage $w_{2A}$ of the inorganic binder such that the condition (3) or (4) is satisfied.
When the binder mixture for use in the attaching step satisfies the condition (3), the ratio $[w_{2B}/w_{2A}]$ of the weight percentage $w_{2B}$ of the organic binder to the weight percentage $w_{2A}$ of the inorganic binder is preferably $0 < w_{2B}/w_{2A} \leq 0.5$, more preferably $0 < w_{2B}/w_{2A} \leq 0.3$, still more preferably $0 < w_{2B}/w_{2A} \leq 0.1$.
When the binder mixture for use in the attaching step satisfies the condition (4), the ratio $[w_{2B}/w_{2A}]$ of the weight percentage $w_{2B}$ of the organic binder to the weight percentage $w_{2A}$ of the inorganic binder is preferably $10 \leq w_{2B}/w_{2A}$, more preferably $11 \leq w_{2B}/w_{2A}$, still more preferably $13 \leq W_{2B}/W_{2A}$.
The binder mixture for use in the attaching step may contain a polymeric dispersant.
When the binder mixture contains a polymeric dispersant, the inorganic binder and the organic binder are in a dispersed state in the binder mixture. In other words, the binder mixture is a dispersion in which the inorganic binder and the organic binder are dispersed in a dispersion medium. When the binder mixture (dispersion) in such a state is brought into contact with the inorganic fiber mass, the inorganic binder and the organic binder can be attached in a dispersed state to the surface of each inorganic fiber.
The binder mixture for use in the attaching step may contain a flocculant.
When the mixture contains a flocculant, the inorganic binder and the organic binder are in an aggregated state in the mixture. In other words, the binder mixture is an aggregated dispersion in which the aggregates of the inorganic binder and the organic binder are dispersed in a dispersion medium. When the mixture (aggregated dispersion) in such a state is brought into contact with the inorganic fiber mass, the inorganic binder and the organic binder can be attached in an aggregated state to the surface of each inorganic fiber.
In the attaching step, the attaching of an inorganic binder and the attaching of an organic binder may be separately performed.

Examples of methods for separately performing the attaching of an inorganic binder and the attaching of an organic binder include a method that includes bringing an inorganic binder mixture containing an inorganic binder into contact with the inorganic fiber mass to attach the inorganic binder thereto and then further bringing an organic binder mixture containing an organic binder into contact with the inorganic fiber mass to attach the organic binder thereto. The inorganic binder and the organic binder may be attached in any order. The inorganic binder may be attached first, or the organic binder may be attached first.

[Method for Producing Mat Material (Second Embodiment)]

A method for producing a mat material according to a second embodiment of the present invention includes: a defibrating step of defibrating inorganic fibers; a slurry preparing step of mixing the opened inorganic fibers with a solvent, an inorganic binder, and an organic binder to prepare a slurry; and a papermaking step of subjecting the slurry to papermaking to obtain an inorganic fiber papermaking sheet; and a drying step of drying the inorganic fiber papermaking sheet, wherein a ratio $[w_{3B}/w_{3A}]$ ratio of a weight percentage $w_{3B}$ of the organic binder to a weight percentage $w_{3A}$ of the inorganic binder satisfies the following condition (5) or (6), where $w_{3A}$ is the weight percentage of the inorganic binder contained in the slurry to be prepared in the slurry preparing step, and $w_{3B}$ is the weight percentage of the organic binder contained in the slurry to be prepared in the slurry preparing step:

$$(5)\quad 0 < w_{3B}/w_{3A} \leq 0.8;$$

or

$$(6)\quad 9 \leq w_{3B}/w_{3A}.$$

[Fiber Opening Step]

In the defibrating step, the inorganic fibers are made into short fibers (referred to as defibrating) with a grinder such as a feather mill or an agitator such as a pulper to adjust the fiber length to a desired length.
The inorganic fibers that were made into short fibers may be classified as needed. Preferably, the classification is performed such that the inorganic fibers having a fiber length of 200 $\mu$m or less are partially or entirely removed.
The classification may be performed by, for example, using a dry centrifugal classifier (also referred to as "dry cyclone"), a wet centrifugal classifier (also referred to as "wet cyclone"), or the like.

[Slurry Preparing Step]

In the slurry preparing step, the opened inorganic fibers are mixed with a solvent, an inorganic binder, and an organic binder, whereby a slurry is prepared.
In the slurry preparing step, a slurry is prepared such that the ratio $[w_{3B}/w_{3A}]$ of the weight percentage $w_{3B}$ of the organic binder to the weight percentage $w_{3A}$ of the inorganic binder satisfies the following condition (5) or (6), where $w_{3A}$ is the weight percentage of the inorganic binder contained in the slurry to be prepared, and $w_{3B}$ is the weight percentage of the organic binder contained in the slurry contained in the slurry to be prepared.

$$(5)\quad 0 < w_{3B}/w_{3A} \leq 0.8$$

$$(6)\quad 9 \leq w_{3B}/w_{3A}$$

The inorganic binder and the organic binder may be mixed in any order. Yet, preferably, the inorganic fibers and the inorganic binder are mixed first and left to stand for a while, and the organic binder is then added to the mixture. When the inorganic fibers and the inorganic binder are mixed first, the inorganic binder is certainly attached to the surface of each inorganic fiber. This can increase the friction between the inorganic fibers and improve the surface pressure. Further, aggregates in which the organic binder and the inorganic binder are aggregated by a flocculant may be added to the slurry.

[Papermaking Step]

In the papermaking step, the slurry is poured into a molding machine having a mesh for filtering on its bottom to remove the solvent in the slurry, whereby an inorganic fiber papermaking sheet is obtained.

The solvent may be removed by any means as long as the solvent contained in the inorganic fiber papermaking sheet can be removed. For example, the solvent can be removed by means such as compression, rotation, suction, decompression, or the like.

[Drying Step]

In the drying step, the inorganic fiber papermaking sheet is dried while being compressed by a method such as compression drying with a hot plate using a press dryer or the like.

A mat including the inorganic fibers with at least one of the inorganic binder or the organic binder attached thereto can be obtained by the above steps.

In the method for producing a mat material according to the second embodiment of the present invention, the step of attaching an inorganic binder and/or an organic binder to the mat after drying is not required.

However, when the ratio $[w_{1B}/w_{1A}]$ of the weight percentage $w_{1B}$ of the organic binder attached to the mat to the weight percentage $w_{1A}$ of the inorganic binder attached to the mat satisfies the following condition (1) or (2) after the attaching step, the inorganic binder and/or the organic binder may be attached to the mat after the drying step:

$$(1) \quad 0 < w_{1B}/w_{1A} \leq 0.8;$$

or

$$(2) \quad 9 \leq w_{1B}/w_{1A}.$$

EXAMPLES

The following describes Examples that more specifically disclose the present invention. In the following Examples, the inorganic fiber mass is produced by needling, but the present invention is not limited to these Examples.

(Example 1)

(a) Mat material preparing step

(a-1) Spinning step

To an aqueous solution of basic aluminum chloride prepared to have an Al content of 70 g/L and an Al:Cl ratio of 1:1.8 (atomic ratio) was added silica sol to give a compositional ratio of $Al_2O_3:SiO_2$ of 72:28 (weight ratio) in inorganic fibers after firing. Then, an organic polymer (polyvinyl alcohol) was further added thereto in an appropriate amount, whereby a mixture was prepared.

The resulting mixture was concentrated to obtain a spinning mixture, and the spinning mixture was spun by blowing, whereby an inorganic fiber precursor having an average fiber diameter of 5.1 $\mu$m was produced.

(a-2) Compressing step

The inorganic fiber precursor obtained in the spinning step (a-1) was compressed to produce a continuous sheet.

(a-3) Needle-punching step

The sheet obtained in the compressing step (a-2) was continuously needle-punched under the following conditions, whereby a needle-punched article was produced.

First, a needle board with needles attached thereto at a density of 9 pcs/$cm^2$ was provided. Next, this needle board was set above one surface of the sheet. Then, the needle board was moved up and down once in the thickness direction of the sheet to perform needle-punching, whereby a needle-punched article was produced. At this point, the needles were allowed to penetrate the sheet until barbs formed on the tips of the needles had completely penetrated the sheet from one surface to the other surface.

(a-4) Firing step

The needle-punched article obtained in the needle-punching step (a-3) was continuously fired at a maximum temperature of 1250°C, whereby a fired sheet containing inorganic fibers including alumina and silica at a ratio of parts by weight of 72:28 was produced. The average fiber diameter of the inorganic fibers was 5.1 $\mu$m. The minimum fiber diameter was 3.2 $\mu$m. The thus-obtained fired sheet had a bulk density of 0.15 g/cm$^3$ and a basis weight of 1400 g/m$^2$. The density $\rho$ of the entanglement points was 9 pcs/cm$^2$.

The fired needle-punched article was cut to produce an inorganic fiber mass (needle-punched mat). Neither an inorganic binder nor an organic binder was attached to the inorganic fiber mass.

(a-5) Attaching step

Subsequently, an inorganic binder and an organic binder were attached to the inorganic fiber mass.

(a-5-1) Organic binder mixture preparing step

Acrylate latex was diluted with water, whereby an organic binder mixture having a solids concentration of 0.20 wt% was prepared.

(a-5-2) Inorganic binder mixture preparing step

Alumina was diluted with water and blended with a polymeric dispersant, followed by sufficient stirring. Thereby, an inorganic binder mixture was prepared in which the solids concentration of the inorganic particles was 2.0 wt% and the concentration of the polymeric dispersant was 1000 ppm.

(a-5-3) Binder mixture preparing step

The organic binder mixture obtained in the organic binder mixture preparing step (a-5-1) was added to the inorganic binder mixture obtained in the inorganic binder mixture preparing step (a-5-2) to give a weight ratio of 1:1, followed by sufficient stirring. Thereby, a binder mixture was prepared in which the solids concentration of the organic binder was 0.10 wt%, the solids concentration of the inorganic binder was 1.0 wt%, and the concentration of the polymeric dispersant was 500 ppm.

(a-5-4) Contacting step

The binder mixture obtained in the binder mixture preparing step (a-5-3) was added by curtain coating to the inorganic fiber mass obtained in the firing step (a-4).

(a-5-5) Dehydrating step

The inorganic fiber mass to which the binder mixture was added, which was obtained in the contacting step (a-5-4) above, was sucked and dehydrated by a dehydrator such that the amount of the binder mixture added was adjusted to 100 parts by weight relative to 100 parts by weight of the inorganic fibers, whereby a mat was obtained.

(a-5-6) Drying step

The mat that underwent the dehydrating step (a-5-5) was dried, whereby a mat material according to Example 1 was produced.

(Example 2)

A mat material according to Example 2 was produced by the same procedure as in Example 1, except that the solids concentration of the organic binder mixture prepared in the organic binder mixture preparing step (a-5-1) was changed to 0.66 wt%.

(Example 3)

A mat material according to Example 3 was produced by the same procedure as in Example 1, except that the solids concentration of the organic binder mixture to be prepared in the organic binder mixture preparing step (a-5-1) was changed to 1.60 wt%.

(Example 4)

A mat material according to Example 4 was produced by the same procedure as in Example 1, except that the solids concentration of the organic binder mixture to be prepared in the organic binder mixture preparing step (a-5-1) was changed to 18.0 wt%.

(Example 5)

A mat material according to Example 5 was produced by the same procedure as in Example 1, except that the solids concentration of the organic binder mixture to be prepared in the organic binder mixture preparing step (a-5-1) was changed to 20.0 wt%.

(Comparative Example 1)

A mat material according to Comparative Example 1 was produced by the same procedure as in Example 1, except that the solids concentration of the organic binder mixture to be prepared in the organic binder mixture preparing step (a-5-1) was changed to 0 wt%.

(Comparative Example 2)

A mat material according to Comparative Example 2 was produced by the same procedure as in Example 1, except that the solids concentration of the organic binder mixture to be prepared in the organic binder mixture preparing step (a-5-1) was changed to 2.0 wt%.

(Comparative Example 3)

A mat material according to Comparative Example 3 was produced by the same procedure as in Example 1, except that the solids concentration of the organic binder mixture to be prepared in the organic binder mixture preparing step (a-5-1) was changed to 4.0 wt%.

(Comparative Example 4)

A mat material according to Comparative Example 4 was produced by the same procedure as in Example 1, except that the solids concentration of the organic binder mixture to be prepared in the organic binder mixture preparing step (a-5-1) was changed to 10.0 wt%.

(Comparative Example 5)

A mat material according to Comparative Example 5 was produced by the same procedure as in Example 1, except that the solids concentration of the organic binder mixture to be prepared in the organic binder mixture preparing step (a-5-1) was changed to 16.0 wt%.

(Shear modulus measurement)

The shear failure load and the reduced surface pressure were measured for each of the mat materials of Examples and Comparative Examples, and the shear modulus of each mat material was determined. The shear failure strength and the reduced surface pressure were measured by the methods described in the description of the embodiments of the present invention. Table 1 shows the results.

(Evaluation of inorganic fiber scattering properties)

Each of the mat materials produced in Examples and Comparative Examples was subjected to an inorganic fiber scattering test.
The method of the inorganic fiber scattering test is as described in the description of the embodiment of the present invention. A mat material with a fiber scattering rate of 0.35 wt% or less was evaluated as good "o", and a mat material with a fiber scattering rate of more than 0.35 wt% was evaluated as poor "×". Table 1 shows the results.

[Table 1]

| | Weight percentage of organic binder [wt%] | Weight percentage of inorganic binder [wt%] | Ratio of weight percentage of organic binder to weight percentage of inorganic binder [$w_{1B}/w_{1A}$] | Shear modulus | Evaluation of inorganic fiber scattering properties |
|---|---|---|---|---|---|
| Example 1 | 0.10 | 1.0 | 0.1 | 0.49 | Good |
| Example 2 | 0.33 | 1.0 | 0.3 | 0.39 | Good |
| Example 3 | 0.80 | 1.0 | 0.8 | 0.30 | Good |
| Example 4 | 9.0 | 1.0 | 9.0 | 0.28 | Good |
| Example 5 | 10.0 | 1.0 | 10.0 | 0.34 | Good |
| Comparative Example 1 | 0.0 | 1.0 | 0.0 | 0.65 | Poor |
| Comparative Example 2 | 1.0 | 1.0 | 1.0 | 0.25 | Good |
| Comparative Example 3 | 2.0 | 1.0 | 2.0 | 0.22 | Good |
| Comparative Example 4 | 5.0 | 1.0 | 5.0 | 0.18 | Good |
| Comparative Example 5 | 8.0 | 1.0 | 8.0 | 0.21 | Good |

As shown in Table 1, the mat materials of the present invention were found to have a high shear modulus, with inorganic fiber scattering being prevented or reduced.

REFERENCE SIGNS LIST

1, 2        mat material
1a, 1b      specimen
10          mat
11          protrusion
12          recess
15          entanglement point
17          first region
18          second region
20          inorganic fibers
30          coating layer
40          particulate mixture
50          protective sheet
70          shear failure load test device
71          left jig
72          right jig
73          stainless-steel plate
74          protruding member
100         exhaust gas conversion apparatus
120         metal casing
130         exhaust gas treatment unit
130a        exhaust gas inlet-side end
130b        exhaust gas discharge-side end
131         cell
132         cell wall
133         plug

| 200 | test device |
|---|---|
| 210 | scattering test sample |
| 220 | clip |
| 250 | base |
| 260 | supporting post |
| 270 | sample supporting arm |
| 280 | fixing member |
| 290 | vertical wall member |

**Claims**

1. A mat material comprising

   inorganic fibers, with an inorganic binder and an organic binder attached to the mat material,
   wherein a ratio [$w_{1B}/w_{1A}$] of a weight percentage $w_{1B}$ of the organic binder to a weight percentage $w_{1A}$ of the inorganic binder satisfies the following condition (1) or (2), where $w_{1A}$ is the weight percentage of the inorganic binder relative to a weight of the mat material as a whole, and $w_{1B}$ is the weight percentage of the organic binder relative to the weight of the mat material as a whole:

   $$(1) \quad 0 < w_{1B}/w_{1A} \leq 0.8;$$

   or

   $$(2) \quad 9 \leq w_{1B}/w_{1A}.$$

2. The mat material according to claim 1,
   wherein the inorganic binder and the organic binder are attached in an individually dispersed state to a surface of each inorganic fiber.

3. The mat material according to claim 1 or 2, further comprising a polymeric dispersant.

4. The mat material according to claim 1,
   wherein aggregates of the inorganic binder and the organic binder are attached to the surface of each inorganic fiber.

5. The mat material according to any one of claims 1 to 4,
   wherein the surface of each inorganic fiber is at least partially covered with a coating layer containing a mixture of the inorganic binder and the organic binder.

6. The mat material according to claim 5,
   wherein the coating layer is formed from a continuous flaky mixture of the inorganic binder and the organic binder.

7. The mat material according to claim 5 or 6,
   wherein the coating layer has a stepped shape.

8. The mat material according to any one of claims 5 to 7,
   wherein a particulate mixture of the inorganic binder and the organic binder is attached to a surface of the coating layer.

9. The mat material according to any one of claims 1 to 8,
   wherein the mat material is a needle-punched mat in which at least one of a front surface or a back surface thereof is needled.

10. The mat material according to claim 9,
    wherein the mat material includes multiple entanglement points formed by needling at least one of the front surface or the back surface thereof, and a density $\rho$ of the entanglement points is in a range of 0.5 pcs/cm$^2 \leq \rho < 18$ pcs/cm$^2$.

11. The mat material according to claim 9 or 10,
    wherein the mat material includes multiple entanglement points formed by needling at least one of the front surface or the back surface thereof, and at least one of a 4 mm × 4 mm first region without the entanglement points or a 3 mm × 8 mm second region without the entanglement points is arranged in a 25 mm × 25 mm region.

12. The mat material according to claim 11,
    wherein at least one of the first region or the second region is arranged in a plural number in the 25 mm × 25 mm region.

13. The mat material according to any one of claims 1 to 12,
    wherein the mat material is for use in an exhaust gas conversion apparatus.

14. The mat material according to any one of claims 1 to 13,
    wherein the mat material has a shear modulus of 0.26 or more.

15. The mat material according to any one of claims 1 to 14, further comprising a protective sheet on at least one surface thereof.

16. An exhaust gas conversion apparatus comprising:

    an exhaust gas treatment unit;
    a metal casing for housing the exhaust gas treatment unit; and
    a mat material arranged between the exhaust gas treatment unit and the metal casing for holding the exhaust gas treatment unit,
    wherein the mat material is the mat material according to any one of claims 1 to 15.

17. A method for producing a mat material, comprising:

    a needle-punched mat preparing step of preparing an inorganic fiber mass including inorganic fibers by needling; and
    an attaching step of attaching an inorganic binder and an organic binder to the inorganic fiber mass,
    wherein a ratio $[w_{2B}/w_{2A}]$ of a weight percentage $w_{2B}$ of the organic binder to a weight percentage $w_{2A}$ of the inorganic binder satisfies the following condition (3) or (4), where $w_{2A}$ is the percentage of the inorganic binder for use in the attaching step, and $w_{2B}$ is the weight percentage of the organic binder for use in the attaching step:

    $$(3) \quad 0 < w_{2B}/w_{2A} \leq 0.8;$$

    or

    $$(4) \quad 9 \leq w_{2B}/w_{2A}.$$

18. The method for producing a mat material according to claim 17,
    wherein in the attaching step, a dispersion in which the inorganic binder and the organic binder are dispersed in a dispersion medium is attached to the inorganic fiber mass.

19. The method for producing a mat material according to claim 17,
    wherein in the attaching step, an aggregated dispersion in which the inorganic binder and the organic binder are aggregated is attached to the inorganic fiber mass.

20. A method for producing a mat material, comprising:

    a defibrating step of defibrating inorganic fibers;
    a slurry preparing step of mixing the opened inorganic fibers with a solvent, an inorganic binder, and an organic binder to prepare a slurry; and
    a papermaking step of subjecting the slurry to papermaking to obtain an inorganic fiber papermaking sheet; and
    a drying step of drying the inorganic fiber papermaking sheet,
    wherein a ratio $[w_{3B}/w_{3A}]$ of a weight percentage $w_{3B}$ of the organic binder to a weight percentage $w_{3A}$ of the inorganic binder satisfies the following condition (5) or (6), where $w_{3A}$ is the weight percentage of the inorganic binder contained in the slurry to be prepared in the slurry preparing step, and $w_{3B}$ is the weight percentage of the organic binder contained in the slurry to be prepared in the slurry preparing step:

$$(5) \quad 0 < w_{3B}/w_{3A} \leq 0.8;$$

or

$$(6) \quad 9 \leq w_{3B}/w_{3A}.$$

$$(5) \quad 0 < w_{3B}/w_{3A} \leq 0.8;$$

FIG.1

FIG.2

FIG.3

FIG.4

FIG.5

FIG.6

FIG.7

FIG.8

FIG.9

FIG.10

FIG.11

FIG.12

## INTERNATIONAL SEARCH REPORT

| International application No. |
| --- |
| **PCT/JP2023/006349** |

**A.    CLASSIFICATION OF SUBJECT MATTER**

*D04H 1/488*(2012.01)i; *B01D 46/00*(2022.01)i; *B01D 53/94*(2006.01)i; *D04H 1/4209*(2012.01)i; *D06M 11/45*(2006.01)i; *D06M 11/79*(2006.01)i; *D06M 15/263*(2006.01)i; *F01N 3/28*(2006.01)i

FI:    D04H1/488; B01D46/00 302; B01D53/94 ZAB; D04H1/4209; D06M11/45; D06M11/79; D06M15/263; F01N3/28 311N; F01N3/28 311S

According to International Patent Classification (IPC) or to both national classification and IPC

**B.    FIELDS SEARCHED**

Minimum documentation searched (classification system followed by classification symbols)

D04H1/00-18/04; B01D46/00; B01D53/94; D06M11/45; D06M11/79; D06M15/263; F01N3/28

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2015/045636 A1 (IBIDEN CO., LTD.) 02 April 2015 (2015-04-02) claims 1, 3, 5-6, 8, paragraphs [0011], [0012], [0043] , [0056]-[0068], example 1, fig. 1 | 1-3, 5, 8-9, 13-14, 16-18, 20 |
| Y | | 4, 7, 10-12, 15, 19 |
| Y | WO 2015/170610 A1 (IBIDEN CO., LTD.) 12 November 2015 (2015-11-12) claims 1-2, 9, paragraphs [0001], [0007], fig. 1, 2 | 4, 7, 19 |
| Y | JP 2001-65337 A (IBIDEN CO., LTD.) 13 March 2001 (2001-03-13) claims 1, 5, paragraphs [0001], [0008], [0027]-[0031], example 1, fig. 2 | 10-12 |
| Y | JP 2014-190191 A (IBIDEN CO., LTD.) 06 October 2014 (2014-10-06) claims 1-2, 10-11, paragraphs [0001], [0027] | 15 |
| X | JP 2002-66331 A (NICHIAS CORP.) 05 March 2002 (2002-03-05) claims 1, 4-6, paragraphs [0001], [0016]-[0018], [0026], fig. 3 | 1-2, 4-5, 8, 13-14, 20 |
| A | JP 2003-266572 A (NICHIAS CORP.) 24 September 2003 (2003-09-24) whole document | 1-20 |

☑ Further documents are listed in the continuation of Box C.    ☑ See patent family annex.

| | |
| --- | --- |
| \*    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **12 May 2023** | **30 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2023/006349** |

| C. | DOCUMENTS CONSIDERED TO BE RELEVANT | |
|---|---|---|
| Category* | Citation of document, with indication, where appropriate, of the relevant passages | Relevant to claim No. |
| A | US 2014/0248814 A1 (ZOLTEK COMPANIES, INC.) 04 September 2014 (2014-09-04) whole document | 1-20 |

Form PCT/ISA/210 (second sheet) (January 2015)

## INTERNATIONAL SEARCH REPORT
### Information on patent family members

International application No.

**PCT/JP2023/006349**

| Patent document cited in search report | | | Publication date (day/month/year) | Patent family member(s) | | | Publication date (day/month/year) |
|---|---|---|---|---|---|---|---|
| WO | 2015/045636 | A1 | 02 April 2015 | EP 3051186 A1 claims 1, 3, 5-6, 8, paragraphs [0022]-[0025], [0097], [0119]-[0183], example 1, fig. 1 | | | |
| WO | 2015/170610 | A1 | 12 November 2015 | (Family: none) | | | |
| JP | 2001-65337 | A | 13 March 2001 | (Family: none) | | | |
| JP | 2014-190191 | A | 06 October 2014 | US 2014/0290228 A1 claims 1-2, 12-13, paragraphs [0003], [0031], [0047] EP 2784283 A2 | | | |
| JP | 2002-66331 | A | 05 March 2002 | US 2002/0025904 A1 claims 1, 5-7, paragraphs [0002], [0021]-[0023], [0033], fig. 3 EP 1182333 A1 KR 10-2002-0016548 A | | | |
| JP | 2003-266572 | A | 24 September 2003 | US 2002/0168492 A1 whole document EP 1245718 A2 | | | |
| US | 2014/0248814 | A1 | 04 September 2014 | WO 2013/052723 A2 | | | |

Form PCT/ISA/210 (patent family annex) (January 2015)

32

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 201545636 A